# EUROPEAN PATENT SPECIFICATION

(11) **EP 3 683 085 B1**
(45) Date of publication and mention of the grant of the patent: **21.10.2026**
(21) Application number: 18857244.0
(22) Date of filing: 26.03.2018
(51) Int. Cl.: B60L 15/40, B61L 3/00, B61L 15/00, B61L 27/14, B61L 11/00

(54) **TRAIN CONTROL SYSTEM**
ZUGSTEUERUNGSSYSTEM
SYSTÈME DE COMMANDE DE TRAIN

(30) Priority: 15.09.2017 JP 2017177253
(43) Date of publication of application: 22.07.2020
(73) Proprietor: Hitachi, Ltd., Tokyo 100-8280 (JP)
(72) Inventor: ABE, Yuta, Tokyo 100-8280 (JP)
(74) Representative: Mewburn Ellis LLP
(86) International application number: PCT/JP2018/012241
(87) International publication number: WO 2019/053930

(56) References cited:
- JP-A- 2010 036 722
- JP-A- 2011 020 578
- JP-A- 2011 235 681
- JP-A- H1 178 894
- US-A1- 2016 039 438

## Description

### Technical Field

The present invention relates to a train control system that performs automatic control of a train according to an operating plan of the day.

### Background Art

PTL 1 describes a train operation management apparatus that can automatically search a rail yard for an alternative car formation of a traveling car formation in which an abnormality has occurred, and can cause an alternative replacement car formation to depart.

This PTL 1 describes "including car change determination means for inputting an abnormality that occurs in mounted equipment of a traveling car formation or a sign of the abnormality as abnormality detection information, and determining whether it is necessary to change a car of the traveling car formation from the abnormality detection information, and operation change updating means for creating, when it is necessary to change a car, a diagram that causes the traveling car formation to enter a rail yard and an alternative car formation for the traveling car formation to depart from the rail yard".

### Citation List

### Patent Literature

PTL 1: JP 9-66833 A
US 2016/039438 proposes an on board device to control the travelling of a moving vehicle to an inspection field in a railyard. JP 2010 036722 A proposes a train operation prediction providing system. JP 2011 020578 A proposes a system for controlling a change of a traveling route of a railway rolling stock.

### Summary of Invention

### Technical Problem

The train operation management apparatus described in PTL 1 requires a train operation management apparatus that manages an operation of the train to be installed on the ground side in addition to an on-board apparatus, and there is a problem that introduction cost and maintenance and management cost thereof increase. An object of the present invention is to construct a train operation management system by an on-board apparatus without providing a costly train operation management apparatus on the ground side.

### Solution to Problem

In order to solve the above-described problems, the present invention provides a train control system according to claim 1.

### Advantageous Effects of Invention

According to the present invention, a train operation management system can be constructed without providing a train operation management apparatus on the ground side.

### Brief Description of Drawings

[FIG. 1] FIG. 1 is a system configuration diagram of a train operation management system as a ground apparatus.
[FIG. 2] FIG. 2 is a flowchart illustrating an operation example of an on-board control unit 114 when a predetermined event occurs in a present embodiment.
[FIG. 3] FIG. 3 is a flowchart illustrating an operation example of the on-board control unit 114 when a diagram has been received in the present embodiment.
[FIG. 4] FIG. 4 is a flowchart illustrating an operation example of the on-board control unit 114 that updates train travel permission in the present embodiment.
[FIG. 5] FIG. 5 is a flowchart illustrating an operation example of an on-board communication unit 112 in the present embodiment.
[FIG. 6] FIG. 6 is a flowchart illustrating an operation example of a ground communication unit 102 in the present embodiment.
[FIG. 7] FIG. 7 is a diagram illustrating an example of a diagram correction in the present embodiment.
[FIG. 8] FIG. 8 is a diagram illustrating an example of a diagram correction in the present embodiment.
[FIG. 9] FIG. 9 is a diagram illustrating an example of a configuration of tracks and switches at an A station and a B station.
[FIG.10] FIG. 10 is an example of a diagram of trains passing each other at the A station.

### Description of Embodiments

Embodiments will be described below with reference to the drawings.

### First Embodiment

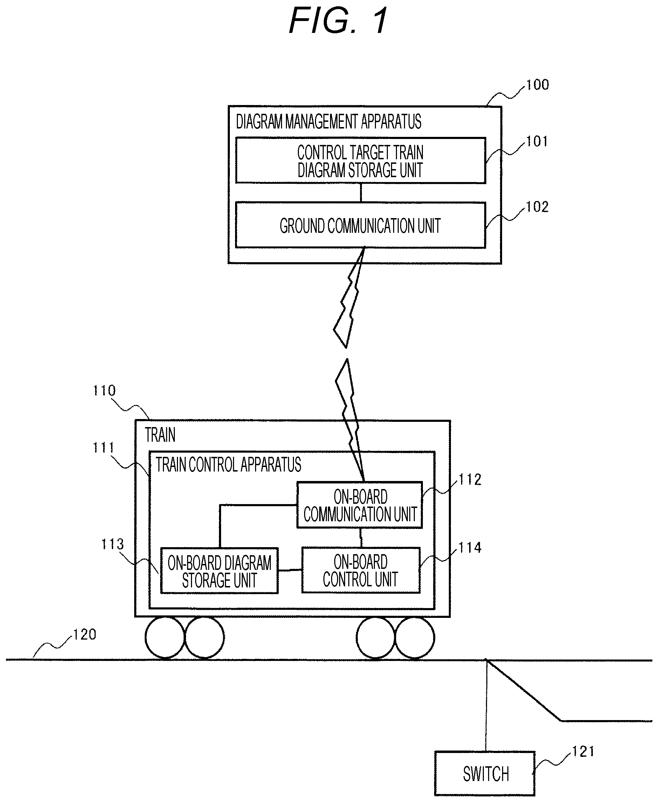

FIG. 1 is a diagram illustrating a configuration example of a train control system in the present embodiment.

The train control system in the present embodiment includes a diagram management apparatus 100 and a train control apparatus 111 mounted on a train 110. The train 110 travels on a track 120. There is a branch on the track 120, and there is a switch 121 as a device for controlling the branch. In the figure, the train 110 is denoted with only one car, but the train 110 is not limited to this and may have many cars. Similarly, although only one branch and one switch 121 are illustrated on the track 120 in the figure, the present invention is not limited to this, and numerous branches and switches 121 may be provided in order to form numerous routes.

The diagram management apparatus 100 manages a diagram that is a train operating plan. The diagram management apparatus 100 is constituted of a control target train diagram storage unit 101 and a ground communication unit 102.

The control target train diagram storage unit 101 stores a diagram of the train as a control target and transmits a diagram according to a request from the ground communication unit 102. Further, the control target train diagram storage unit 101 receives the updated diagram from the ground communication unit 102, and updates and stores the stored diagram.

Furthermore, the control target train diagram storage unit 101 stores an on-track range that is a range where the train may be present on a track, creates all-train on-track ranges that are on-track ranges of all trains as targets of control, and transmits the all-train on-track ranges according to a request from the ground communication unit 102.

The ground communication unit 102 communicates with the train control apparatus 111, receives an updated diagram from the train control apparatus 111, and transmits the diagram to the control target train diagram storage unit 101. Further, the diagram is transmitted to the train control apparatuses 111 of all the trains 110 that as control targets.

The ground communication unit 102 communicates with the train control apparatus 111 by radio, but may communicate with the train control apparatus 111 by wire, such as communicating via a track.

Furthermore, the ground communication unit 102 communicates with the train control apparatus 111, receives an on-track range from the train control apparatus 111, and transmits the on-track range to the control target train diagram storage unit 101. In addition, the ground communication unit 102 requests the control target train diagram storage unit 101 for all-train on-track ranges, and receives the all-train on-track ranges. Thereafter, the received all-train on-track ranges are transmitted to the train control apparatuses 111 of all the trains 110 that are control targets.

The train control apparatus 111 is constituted of an on-board communication unit 112, an on-board diagram storage unit 113, and an on-board control unit 114.

According to a request from the on-board control unit 114, the on-board communication unit 112 receives a diagram from the on-board control unit 114, and transmits the diagram to the diagram management apparatus 100. Further, the on-board communication unit 112 receives a diagram from the diagram management apparatus 100, transmits the diagram to the on-board diagram storage unit 113, and causes the diagram to be transmitted to the on-board control unit 114.

Furthermore, according to a request from the on-board control unit 114, the on-board communication unit 112 transmits an on-track range of the own train to the diagram management apparatus 100. Further, the on-board communication unit 112 receives the all-train on-track ranges from the diagram management apparatus 100, and transmits the all-train on-track ranges to the on-board diagram storage unit 113, and causes the all-train on-track ranges to be transmitted to the on-board control unit 114.

In addition, according to an instruction from the on-board control unit 114, the on-board communication unit 112 communicates with the switch 121, and instructs to control a branch.

The on-board diagram storage unit 113 receives and stores a diagram from the on-board communication unit 112, and transmits the diagram to the on-board control unit 114.

Further, the on-board diagram storage unit 113 receives and stores all-train on-track ranges from the on-board communication unit 112, and transmits the all-train on-track ranges to the on-board control unit 114.

The on-board control unit 114 receives a diagram from the on-board diagram storage unit 113 and controls the own train 110 according to the diagram. At that time, in order to configure a necessary route, the on-board communication unit 112 is instructed to control the switch 121. Further, the on-board control unit 114 corrects the diagram of the own train 110 when a predetermined event occurs, and transmits the corrected diagram to the diagram management apparatus 100 by the on-board communication unit 112.

Furthermore, the on-board control unit 114 recognizes an on-track range of the own train 110, and causes the on-board communication unit 112 to transmit the on-track range of the own train 110 to the diagram management apparatus 100. Further, the on-board control unit 114 receives the all-train on-track ranges from the on-board diagram storage unit 112 and permits the own train 110 to travel within a range in which the on-track range of the own train 110 does not overlap with the on-track range of other trains 110.

The switch 121 is a device that controls a branch on the route of the track 120, and receives an instruction from the on-board communication unit 112 to control the branch.

Next, operation of the train control apparatus 111 in the present embodiment will be described.

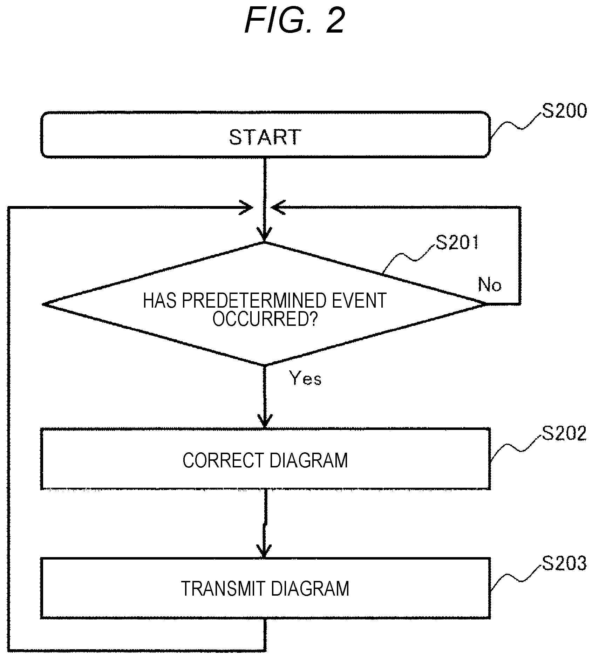

FIG. 2 is a flowchart illustrating an operation example of the on-board control unit 114 when a predetermined event occurs in the present embodiment.

The on-board control unit 114 starts this process (S200) when the system is started.

In S200, the on-board control unit 114 starts this process, and proceeds to S201.

In S201, the on-board control unit 114 confirms whether a predetermined event has occurred. The on-board control unit 114 proceeds to S201 when a predetermined event has not occurred (No in S201). When the predetermined event has occurred (Yes in S201), the on-board control unit 114 proceeds to S202.

Note that the predetermined event refers to an event that hinders operation of the train 110 as a control target of the train control apparatus 111. Examples of the event include a failure of the train 110, a trouble of a passenger, and the like, but the present invention is not limited thereto.

In S202, the on-board control unit 114 corrects the diagram. Thereafter, the on-board control unit 114 proceeds to S203.

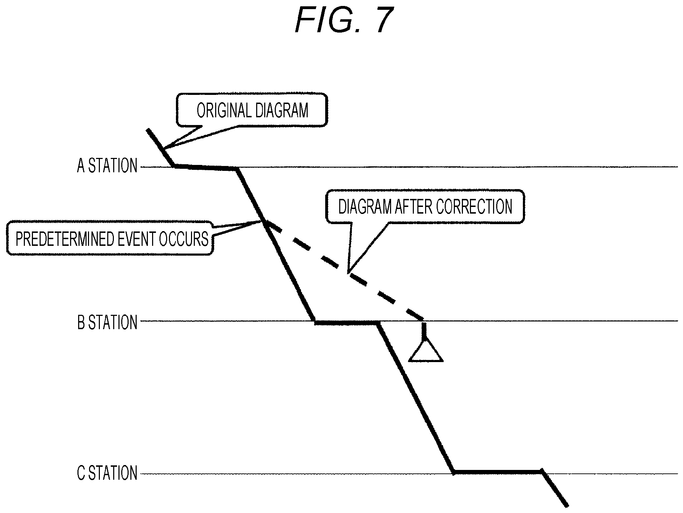

The diagram is corrected as follows. FIG. 7 is a diagram illustrating an example of diagram correction. When a predetermined event occurs in the train 110 traveling from an A station to a B station, the on-board control unit 114 of the train 110 creates a diagram to reduce speed for safety and operate to the next B station, stop operation at the B station, and enter a section. This is taken as a corrected diagram.

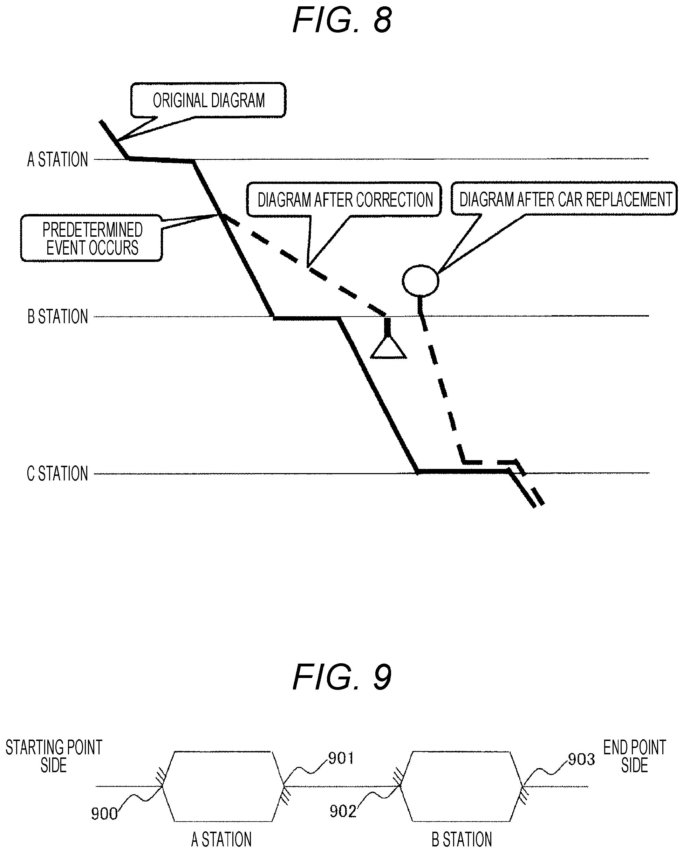

Further, the diagram may be corrected as follows. FIG. 8 is a diagram illustrating an example of diagram correction. When a predetermined event occurs in the train 110 traveling from an A station to a B station, the on-board control unit 114 of the train 110 creates a diagram to reduce speed for safety and operate to the next B station, stop operation at the B station, and enter a section. Thereafter, when there is a replaceable car at the B station, the on-board control unit 114 generates a diagram to replace a car (car replacement diagram), and takes this diagram as a corrected diagram.

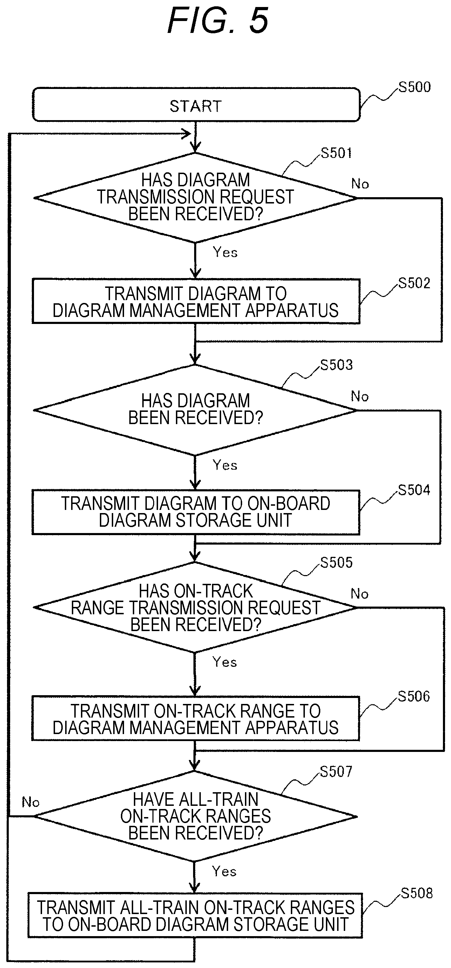

Whether or not there is a replaceable car at the B station can be recognized in the all-train on-track ranges which will be described later. Specifically, the all-train on-track ranges have been received in S507 of FIG. 5, and since the all-train on-track ranges include all-train on-track ranges of other cars, it is possible to confirm the presence of cars on a track at the B station. When the diagram management apparatus 100 generates the all-train on-track ranges, by receiving a state of each train (a state of carrying passengers on board, a state of being a deadhead train after passengers are disembarked and, a state that the train is stopped, a state that the train is stopped in a storage track, a state that the train is in a rail yard, or the like) from respective trains, and associating the states with the respective train on-track ranges, it is possible to recognize a train that does not affect operation (for example, a train in a state other than an operating state with passengers on board and in an operable state), and when such a train is present at the B station, generating a diagram as in FIG. 8 enables to perform an appropriate car replacement.

In S203, the on-board control unit 114 transmits the corrected diagram to the diagram management apparatus 100 by the on-board communication unit 112. Thereafter, the on-board control unit 114 proceeds to S201.

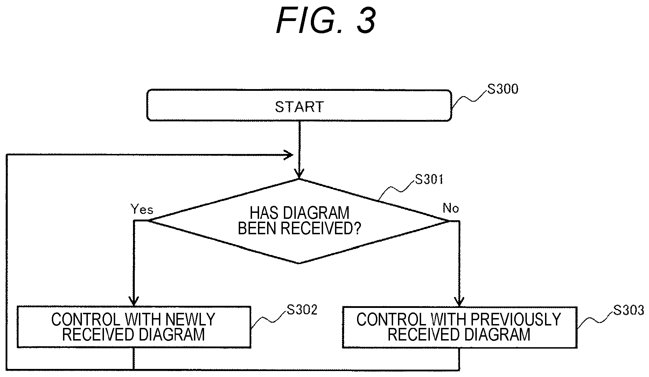

FIG. 3 is a flowchart illustrating an operation example of the on-board control unit 114 when a diagram has been received in the present embodiment.

The on-board control unit 114 starts this process (S300) when the system is started.

In S300, the on-board control unit 114 starts this process, and proceeds to S301.

In S301, the on-board control unit 114 confirms whether a diagram has been received from the on-board diagram storage unit 113. When the diagram has been received (Yes in S301), the on-board control unit 114 proceeds to S302. When the diagram has not been received (No in S301), the on-board control unit 114 proceeds to S303.

In S302, the on-board control unit 114 controls the own train 110 with the newly received diagram. Thereafter, the on-board control unit 114 proceeds to S301.

In S303, the on-board control unit 114 controls the own train 110 with a previously received diagram. The on-board control unit 114 does not perform control when there is no previously received diagram. Thereafter, the on-board control unit 114 proceeds to S301.

The own train 110 is controlled as follows. The on-board control unit 114 of the own train 110 configures a route to travel from the diagram. For example, when the train 110 operates according to the original diagram in FIG. 7, when the train 110 leaves the A station and arrives at the B station, the on-board control unit 114 of the train 110 needs to configure a route from the A station to the B station before departing from the A station.

FIG. 9 is a diagram illustrating an example of a configuration of tracks and switches of the A station and the B station. The A station is located on a starting point side and the B station is located on an end point side. The route from the starting point side to the A station, from the A station to the B station, and from the B station to the end point side is a single line. The A station and the B station have two lines so that trains on outbound and inbound lines can pass each other. The direction from the starting point side to the end point side is an outbound line, and the direction from the end point side to the starting point side is an inbound line. As for platforms of each station, an upper track is the outbound platform and a lower track is the inbound platform. A switch when entering the A station from the starting point side is a switch 900, a switch when departing from the A station and heading toward the end point direction is a switch 901, a switch when entering the B station from the starting point direction is a switch 902, and a switch when heading toward a liquor shop from the B station is a switch 903.

In each of the switch 900 to the switch 903, a state of being set to the direction to enter the station is a normal position, and a state of being set to the opposite direction thereof is a reverse position.

At this time, the on-board control unit 114 extracts a time of departure from the station A from the diagram, and configures a route a predetermined time prior to that time. In order to configure this route, the on-board control unit 114 transmits instructions to set the switch 901 to the reverse position and set the switch 902 to the normal position to the respective switches, and when completion of setting is confirmed, the route configuration is completed.

After the route configuration is completed, when it is time to depart from the A station, the on-board control unit 114 causes the own train 110 as a control target to depart from the A station and arrive at the B station. The same applies when heading from the B station to the C station. Similar control is performed for the train heading from the end point direction to the starting point direction.

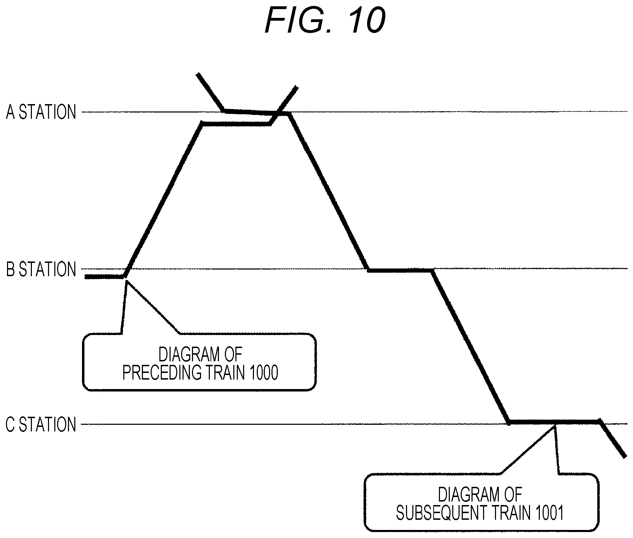

If the route cannot be constructed due to another train, the process waits until the route can be constructed. FIG. 10 is an example of a diagram in which a preceding train 1000 and a subsequent train 1001 pass each other at the A station. Until the preceding train 1000 completes entry to the A station, a route from the B station to the A station is configured by the preceding train 1000, and the subsequent train 1001 cannot configure a route from the A station to the B station. After the preceding train 1000 completes entry to the A station, the route is released, and thus the subsequent train 1001 can configure the route from the A station to the B station.

In this manner, when another train has constructed a route, the track and the switch used by this route cannot be used to construct a route. In order to construct a route, travel permission on that route is necessary. This travel permission will be described later in S400 to S404.

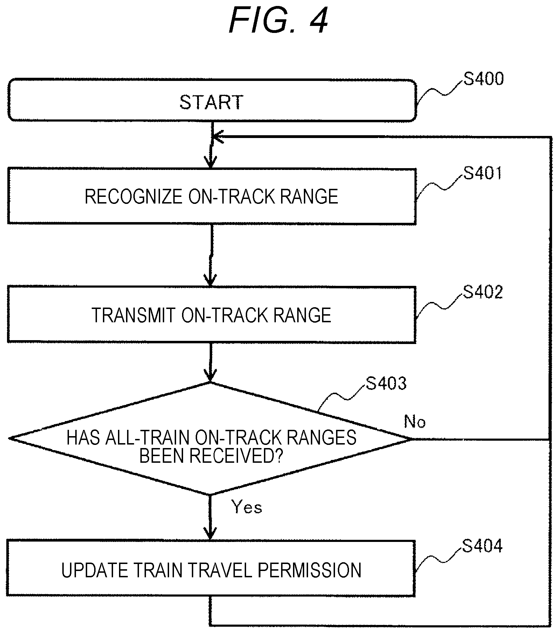

FIG. 4 is a flowchart illustrating an operation example of the on-board control unit 114 that updates train travel permission in the present embodiment.

The on-board control unit 114 starts this process (S400) when the system is started.

In S400, the on-board control unit 114 starts this process, and proceeds to S401.

In S401, the on-board control unit 114 recognizes an on-track range of the own train 110. Thereafter, the on-board control unit 114 proceeds to S402.

Recognition of the on-track range is performed as follows. Although not illustrated, the train 110 has an apparatus that obtains the current position (for example, a global positioning system (GPS) or an apparatus that has ground devices installed on tracks to transmit information related to position information, receives the information related to position information when a train passes a ground device and recognizes the current position, integrates the speed of the train measured by a speed generator or the like to determine the travel distance after the ground device is passed, and obtains a relative position from the passed ground device, or the like). As performed in S302 and S303, when departing from the station, the on-board control unit 114 configures a route to the next arriving station, and set any track and switch to be traveled upon within the configured route to the on-track range. However, any track or switch of a route that the train has traveled and passed through are excluded from the on-track range. That is, as the train travels, the numbers of tracks and switches included in this on-track range decrease.

In S402, the on-board control unit 114 causes the on-board communication unit 112 to transmit the on-track range of the own train 110 to the diagram management apparatus 100. Thereafter, the on-board control unit 114 proceeds to S403.

In S403, the on-board control unit 114 confirms whether the all-train on-track ranges have been received. When the all-train on-track ranges have been received (Yes in S403), the on-board control unit 114 proceeds to S404. When the all-train on-track ranges have not been received (No in S403), the on-board control unit 114 proceeds to S401.

In S404, the on-board control unit 114 updates a range permitted to travel for the own train 110. Thereafter, the on-board control unit 114 proceeds to S401.

The update of the range permitted to travel is performed as follows.

From the all-train on-track ranges, the on-board control unit 114 extracts a track and a switch that are not included in the on-track ranges of other trains and are included in a route that the own train 110 intends to secure, and set the track and switch to the range permitted to travel.

In the example of FIG. 10, until entry to the station A is completed, since the preceding train 1000 includes the switch 901 in the route, the switch 901 is included in the on-track range thereof. Thus, until the preceding train 1000 completes entry to the station A, the on-board control unit 114 of the subsequent train 1001 cannot update the range permitted to travel for departing from the A station, and cannot configure a route from the A station to the B station.

When the preceding train 1000 completes entry to the A station, the switch 901 is removed from the on-track range thereof, and thus the on-board control unit 114 of the subsequent train 1001 can update the range permitted to travel for departing from the A station, can set an outbound line of the A station, the switch 901, the switch 902, and an outbound line of the B station as this range, and can also set the on-track range and the route.

FIG. 5 is a flowchart illustrating an operation example of the on-board communication unit 112 in the present embodiment.

The on-board communication unit 112 starts this process (S500) when the present system is activated.

In S500, the on-board communication unit 112 starts this process, and proceeds to S501.

In step S501, the on-board communication unit 112 confirms whether a diagram transmission request has been received from the on-board control unit 114. When the diagram transmission request has been received from the on-board control unit 114 (Yes in S501), the on-board communication unit 112 proceeds to S502. When the diagram transmission request has not been received from the on-board control unit 114 (No in S501), the on-board communication unit 112 proceeds to S503.

In S502, the on-board communication unit 112 transmits the diagram received from the on-board control unit 114 to the diagram management apparatus 100. Thereafter, the on-board communication unit 112 proceeds to S503.

In S503, the on-board communication unit 112 confirms whether a diagram has been received from diagram management apparatus 100. When the diagram has been received from the diagram management apparatus 100 (Yes in S503), the on-board communication unit 112 proceeds to S504. When the diagram has not been received from the diagram management apparatus 100 (No in S503), the on-board communication unit 112 proceeds to S505.

In S504, the on-board communication unit 112 transmits the diagram received from the diagram management apparatus 100 to the on-board diagram storage unit 113, and causes the diagram to be transmitted to the on-board control unit 114. Thereafter, the on-board communication unit 112 proceeds to S505.

In S505, the on-board communication unit 112 confirms whether a transmission request for the on-track range of the own train has been received from the on-board control unit 114. When the transmission request for the on-track range of the own train has been received from the on-board control unit 114 (Yes in S505), the on-board communication unit 112 proceeds to S506. When the transmission request for the on-track range of the own train has not been received from the on-board control unit 114 (No in S505), the on-board communication unit 112 proceeds to S507.

In S506, the on-board communication unit 112 transmits the on-track range of the own train to the diagram management apparatus 100. Thereafter, the on-board communication unit 112 proceeds to S507.

In S507, the on-board communication unit 112 confirms whether the all-train on-track ranges have been received from the diagram management apparatus 100. When the all-train on-track ranges have been received from the diagram management apparatus 100 (Yes in S507), the on-board communication unit 112 proceeds to S508. When the all-train on-track ranges have not been received from the diagram management apparatus 100 (No in S507), the on-board communication unit 112 proceeds to S501.

In S508, the on-board communication unit 112 transmits the all-train on-track ranges to the on-board diagram storage unit 113, and causes the all-train on-track ranges to be transmitted to the on-board control unit 114. Thereafter, the on-board communication unit 112 proceeds to S501.

Next, operation of the ground communication unit 102 of the diagram management apparatus 100 in the present embodiment will be mainly described.

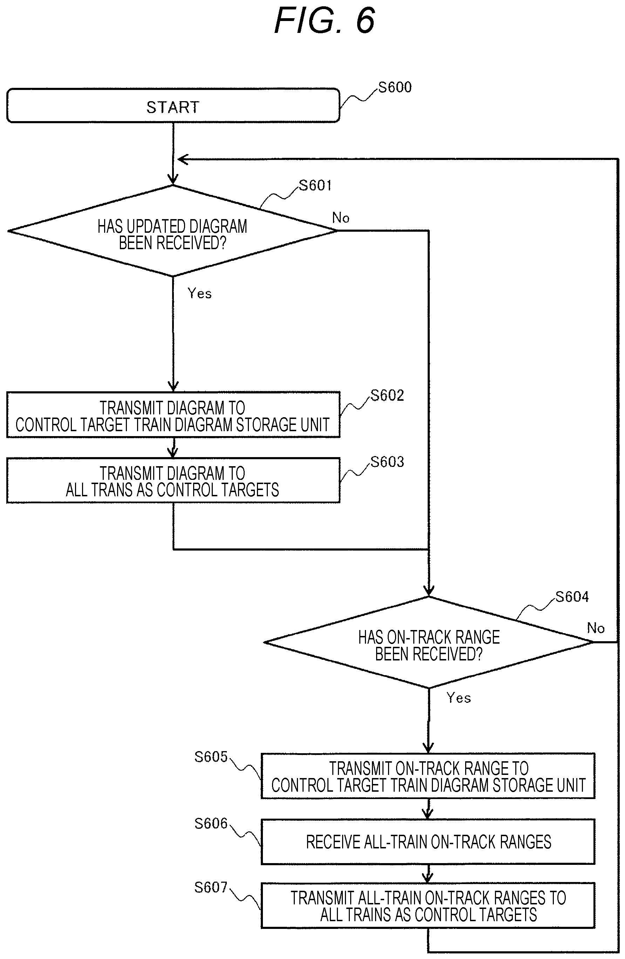

FIG. 6 is a flowchart illustrating an operation example of the ground communication unit 102 in the present embodiment.

The ground communication unit 102 starts this process (S600) when the system is activated.

In S600, the ground communication unit 102 starts this process, and proceeds to S601.

In S601, the ground communication unit 102 confirms whether an updated diagram has been received from train control apparatus 111. When the updated diagram has been received from the train control apparatus 111 (Yes in S601), the ground communication unit 102 proceeds to S602. When the updated diagram has not been received from the train control apparatus 111 (No in S601), the ground communication unit 102 proceeds to S604.

In S602, the ground communication unit 102 transmits the received updated diagram to the control target train diagram storage unit 101. Thereafter, the ground communication unit 102 proceeds to S603.

In S603, the ground communication unit 102 transmits the received updated diagram to the train control apparatuses 111 of all the trains 110 that are control targets. Thereafter, the ground communication unit 102 proceeds to S604.

In S604, the ground communication unit 102 confirms whether an on-track range has been received from train control apparatus 111. When the on-track range has been received from the train control apparatus 111, the ground communication unit 102 proceeds to S605 (Yes in S604). When the on-track range has not been received from the train control apparatus 111, the ground communication unit 102 proceeds to S601 (No in S604).

In S605, the ground communication unit 102 transmits the on-track range to the control target train diagram storage unit 101. Thereafter, the ground communication unit 102 proceeds to S606.

In S606, the ground communication unit 102 requests the control target train diagram storage unit 101 to transmit the all-train on-track ranges, and receives the all-train on-track ranges. Thereafter, the ground communication unit 102 proceeds to S607.

In S607, the ground communication unit 102 transmits the all-train on-track ranges to the train control apparatuses 111 of all the trains 110 that are control targets. Thereafter, the ground communication unit 102 proceeds to S601.

According to the present embodiment, the train operation management system can be constructed without providing a train operation management apparatus on the ground side.

### Reference Signs List

- 100: diagram management apparatus
- 101: control target train diagram storage unit
- 102: ground communication unit
- 110: train
- 111: train control apparatus
- 112: on-board communication unit
- 113: on-board diagram storage unit
- 114: on-board control unit
- 120: track
- 121: switch
- 900: switch
- 901: switch
- 902: switch
- 903: switch
- 1000: preceding train
- 1001: subsequent train

## Claims

1. A train control system comprising:
a diagram management apparatus (100) configured to store and transmit a diagram that is an operating plan of a train (110); and
a train control apparatus (111) configured to receive the diagram from the diagram management apparatus (100) and control the train, wherein
the train control apparatus is suitable to be provided in the train (110);
wherein:
the diagram management apparatus (100) includes a control target train diagram storage unit (101) configured to store the diagram of the train, and a ground communication unit (102) configured to communicate with the train control apparatus (111),
the train control apparatus (111) includes an on-board communication unit (112) configured to communicate with the diagram management apparatus (100), an on-board diagram storage unit (113) configured to store the diagram, and an on-board control unit (114) configured to obtain the diagram from the on-board diagram storage unit and control its own train (110) in which it is provided according to the diagram of its own train,
the on-board control unit (114) is configured to correct the diagram of its own train (110) when a predetermined event occurs, and cause the on-board communication unit (112) to transmit a corrected diagram that is the diagram after correction to the ground communication unit (102),
when the ground communication unit (102) receives the corrected diagram from the on-board communication unit (112), the ground communication unit is configured to transmit the corrected diagram to the control target train diagram storage unit (101), and transmit the corrected diagram to on-board communication units of all trains that are targets of control,
the control target train diagram storage unit (101) is configured to store the corrected diagram when the control target train diagram storage unit receives the corrected diagram,
the on-board communication unit (112) is configured to transmit the corrected diagram to the on-board diagram storage unit (113) when the on-board communication unit receives the corrected diagram from the ground communication unit (102),
the on-board diagram storage unit (113) is configured to store the corrected diagram when the on-board diagram storage unit receives the corrected diagram, and transmit the corrected diagram to the on-board control unit (114),
and
the on-board control unit (114) is configured to control its own train according to the corrected diagram when the on-board control unit receives the corrected diagram; and
**characterised in that**:
the on-board control unit (114) is configured to recognize an on-track range that is a range where there is a possibility that its own train (110) is on a track (120) by: obtaining the current position of its own train, on departing from a station configuring a route to the next station, setting tracks and switches on the route to be in the on-track range, and on travelling the route excluding from the on-track range any of said tracks and switches that its own train has passed through, such that as the train travels the numbers of tracks and switches included in the on-track range decrease, and is further configured to cause the on-board communication unit (112) to transmit the on-track range of its own train to the ground communication unit (102),
the ground communication unit (102) is configured to transmit the on-track range to the control target train diagram storage unit (101) when the ground communication unit receives the on-track range from the on-board communication unit (112), receive all-train on-track ranges that are the on-track ranges of all the trains that are targets of control from the control target train diagram storage unit, and transmit the all-train on-track ranges to the on-board communication unit of all the trains that are targets of control,
the control target train diagram storage unit (101) is configured to receive and store the on-track range, generate the all-train on-track ranges, and transmit the all-train on-track ranges to the ground communication unit (102) in response to a request of the ground communication unit,
the on-board communication unit (112) is configured to receive the all-train on-track ranges and transmit the all-train on-track ranges to the on-board diagram storage unit (113) ,
the on-board diagram storage unit (113) is configured to receive and store the all-train on-track ranges, and
the on-board control unit (114) is configured to receive the all-train on-track ranges from the on-board diagram storage unit (113), and permit traveling of its own train (110) in a range that the on-track range of its own train does not overlap with the on-track range of the other trains, or does not come close by a specified value.

## Patentansprüche

1. Zugsteuersystem, umfassend:
eine Diagrammverwaltungsvorrichtung (100), die dazu ausgelegt ist, ein Diagramm, das ein Betriebsplan eines Zugs (110) ist, zu speichern und zu übertragen; und
eine Zugsteuervorrichtung (111), die dazu ausgelegt ist, das Diagramm von der Diagrammverwaltungsvorrichtung (100) zu empfangen und den Zug zu steuern, wobei
die Zugsteuervorrichtung geeignet ist, um in dem Zug (110) bereitgestellt zu sein;
wobei:
die Diagrammverwaltungsvorrichtung (100) eine Steuerzielzugdiagrammspeichereinheit (101), die konfiguriert ist, um das Diagramm des Zugs zu speichern, und eine Bodenkommunikationseinheit (102), die konfiguriert ist, um mit der Zugsteuervorrichtung (111) zu kommunizieren, umfasst,
die Zugsteuervorrichtung (111) Folgendes umfasst: eine Bordkommunikationseinheit (112), die konfiguriert ist, um mit der Diagrammverwaltungsvorrichtung (100) zu kommunizieren, eine Borddiagrammspeichereinheit (113), die konfiguriert ist, um das Diagramm zu speichern, und eine Bordsteuereinheit (114), die konfiguriert ist, um das Diagramm von der Borddiagrammspeichereinheit zu erhalten und ihren eigenen Zug (110), in dem sie entsprechend dem Diagramm ihres eigenen Zuges bereitgestellt ist, zu steuern,
die Bordsteuereinheit (114) konfiguriert ist, um das Diagramm ihres eigenen Zugs (110) zu korrigieren, wenn ein vorbestimmtes Ereignis eintritt, und zu bewirken, dass die Bordkommunikationseinheit (112) ein korrektes Diagramm, welches das Diagramm nach dem Korrigieren ist, an die Bodenkommunikationseinheit (102) überträgt,
wenn die Bodenkommunikationseinheit (102) das korrigierte Diagramm von der Bordkommunikationseinheit (112) empfängt, die Bodenkommunikationseinheit konfiguriert ist, um das korrigierte Diagramm an die Steuerzielzugdiagrammspeichereinheit (101) zu übertragen und das korrigierte Diagramm an Bordkommunikationseinheiten aller Züge, die Steuerziele sind, zu übertragen,
die Steuerzielzugdiagrammspeichereinheit (101) konfiguriert ist, um das korrigierte Diagramm zu speichern, wenn die Steuerzielzugdiagrammspeichereinheit das korrigierte Diagramm empfängt,
die Bordkommunikationseinheit (112) konfiguriert ist, um das korrigierte Diagramm an die Borddiagrammspeichereinheit (113) zu übertragen, wenn die Bordkommunikationseinheit das korrigierte Diagramm von der Bodenkommunikationseinheit (102) empfängt,
die Borddiagrammspeichereinheit (113) konfiguriert ist, um das korrigierte Diagramm zu speichern, wenn die Borddiagrammspeichereinheit das korrigierte Diagramm empfängt, und das korrigierte Diagramm an die Bordsteuereinheit (114) zu übertragen, und wobei
die Bordsteuereinheit (114) konfiguriert ist, um ihren eigenen Zug entsprechend dem korrigierten Diagramm zu steuern, wenn die Bordsteuereinheit das korrigierte Diagramm empfängt; und
**dadurch gekennzeichnet, dass**:
die Bordsteuereinheit (114) konfiguriert ist, um einen Gleisbereich zu erkennen, der ein Bereich ist, in dem eine Wahrscheinlichkeit besteht, dass ihr eigener Zug (110) auf einem Gleis (120) ist, indem sie: die aktuelle Position ihres eigenen Zugs bei der Abfahrt von einer Station empfängt und einen Weg bis zu der nächsten Station konfiguriert, Gleise und Weichen auf dem Weg so einstellt, dass sie im Gleisbereich liegen, und beim Befahren des Wegs Schienen und Weichen aus dem Gleisbereich ausschließt, die ihr eigener Zug passiert hat, sodass während der Fahrt des Zugs die Anzahl der Schienen und Weichen, die in dem Gleisbereich enthalten sind, abnimmt; und ferner konfiguriert ist, um zu bewirken, dass die Bordkommunikationseinheit (112) den Gleisbereich ihres eigenen Zugs an die Bodenkommunikationseinheit (102) überträgt,
die Bodenkommunikationseinheit (102) konfiguriert ist, um den Gleisbereich an die Steuerzielzugdiagrammspeichereinheit (101) zu übertragen, wenn die Bodenkommunikationseinheit den Gleisbereich von der Bordkommunikationseinheit (112) empfängt, Gleisbereiche aller Züge, die Gleisbereiche aller Züge sind, welche Steuerziele sind, von der Steuerzielzugdiagrammspeichereinheit zu empfangen und die Gleisbereiche aller Züge an die Bordkommunikationseinheit aller Züge, welche Steuerziele sind, zu übertragen,
die Steuerzielzugdiagrammspeichereinheit (101) konfiguriert ist, um den Gleisbereich zu empfangen und zu speichern, die Gleisbereiche für alle Züge zu erzeugen und die Gleisbereiche für alle Züge als Antwort auf eine Anfrage der Bodenkommunikationseinheit an die Bodenkommunikationseinheit (102) zu übertragen,
die Bordkommunikationseinheit (112) konfiguriert ist, um die Gleisbereiche für alle Züge zu empfangen und die Gleisbereiche für alle Züge an die Borddiagrammspeichereinheit (113) zu übertragen,
die Borddiagrammspeichereinheit (113) konfiguriert ist, um die Gleisbereiche für alle Züge zu empfangen und zu speichern, und
die Bordsteuereinheit (114) konfiguriert ist, um die Gleisbereiche für alle Züge von der Borddiagrammspeichereinheit (113) zu empfangen und das Fahren ihres eigenen Zugs (110) in einem Bereich, in dem der Gleisbereich ihres eigenen Zugs sich nicht mit dem Gleisbereich der anderen Züge überlappt oder um einen spezifizierten Wert entfernt bleibt, ermöglicht.

## Revendications

1. Système de commande de train, comprenant :
un appareil de gestion de graphique (100) configuré pour stocker et transmettre un graphique qui est un plan d'exploitation d'un train (110) ; et
un appareil de commande de train (111) configuré pour recevoir le graphique en provenance de l'appareil de gestion de graphique (100) et commander le train, dans lequel
l'appareil de commande de train est approprié pour être fourni dans le train (110) ;
dans lequel :
l'appareil de gestion de graphique (100) inclut une unité de stockage de graphique de train cible de commande (101) configurée pour stocker le graphique du train, et une unité de communication au sol (102) configurée pour communiquer avec l'appareil de commande de train (111),
l'appareil de commande de train (111) inclut une unité de communication embarquée (112) configurée pour communiquer avec l'appareil de gestion de graphique (100), une unité de stockage de graphique embarquée (113) configurée pour stocker le graphique, et une unité de commande embarquée (114) configurée pour obtenir le graphique à partir de l'unité de stockage de graphique embarquée et commander son propre train (110) dans lequel elle est fournie selon le graphique de son propre train,
l'unité de commande embarquée (114) est configurée pour corriger le graphique de son propre train (110) lorsqu'un événement prédéterminé se produit, et amener l'unité de communication embarquée (112) à transmettre un graphique corrigé, qui est le graphique après correction, à l'unité de communication au sol (102),
lorsque l'unité de communication au sol (102) reçoit le graphique corrigé en provenance de l'unité de communication embarquée (112), l'unité de communication au sol est configurée pour transmettre le graphique corrigé à l'unité de stockage de graphique de train cible de commande (101), et transmettre le graphique corrigé aux unités de communication embarquées de tous les trains qui sont des cibles de commande,
l'unité de stockage de graphique de train cible de commande (101) est configurée pour stocker le graphique corrigé lorsque l'unité de stockage de graphique de train cible de commande reçoit le graphique corrigé.
l'unité de communication embarquée (112) est configurée pour transmettre le graphique corrigé à l'unité de stockage de graphique embarqué (113) lorsque l'unité de communication embarquée reçoit le graphique corrigé en provenance de l'unité de communication au sol (102),
l'unité de stockage de graphique embarquée (113) est configurée pour stocker le graphique corrigé lorsque l'unité de stockage de graphique embarquée reçoit le graphique corrigé, et transmettre le graphique corrigé à l'unité de commande embarquée (114), et
l'unité de commande embarquée (114) est configurée pour commander son propre train selon le graphique corrigé lorsque l'unité de commande embarquée reçoit le graphique corrigé ; et
**caractérisé en ce que** :
l'unité de commande embarquée (114) est configurée pour reconnaître une plage sur la voie qui est une plage où il est possible que son propre train (110) soit sur une voie (120) en : obtenant la position actuelle de son propre train, en partant d'une station configurant un itinéraire vers la station suivante, en réglant les voies et les aiguillages sur l'itinéraire pour être dans la plage sur la voie, et en parcourant l'itinéraire en excluant de la plage sur la voie l'un quelconque desdites voies et desdits aiguillages que son propre train a traversé, de telle sorte que lorsque le train se déplace, le nombre de voies et d'aiguillages inclus dans la plage sur la voie diminue, et est en outre configurée pour amener l'unité de communication embarquée (112) à transmettre la plage sur la voie de son propre train à l'unité de communication au sol (102),
l'unité de communication au sol (102) est configurée pour transmettre la plage sur la voie à l'unité de stockage de graphique de train cible de commande (101) lorsque l'unité de communication au sol reçoit la plage sur la voie en provenance l'unité de communication embarquée (112), recevoir toutes les plages sur la voie de tous les trains qui sont les plages sur la voie de tous les trains qui sont des cibles de commande en provenance de l'unité de stockage de graphique de train cible de commande, et transmettre les plages sur la voie de tous les trains à l'unité de communication à bord de tous les trains qui sont des cibles de commande,
l'unité de stockage de graphique de train cible de commande (101) est configurée pour recevoir et stocker la plage sur la voie, générer les plages sur la voie de tous les trains, et transmettre les plages sur la voie de tous les trains à l'unité de communication au sol (102) en réponse à une demande de l'unité de communication au sol,
l'unité de communication embarquée (112) est configurée pour recevoir les plages sur la voie de tous les trains et transmettre les plages sur la voie de tous les trains à l'unité de stockage de graphique embarquée (113),
l'unité de stockage de graphique embarquée (113) est configurée pour recevoir et stocker les plages sur la voie de tous les trains, et
l'unité de commande embarquée (114) est configurée pour recevoir les plages sur la voie de tous les trains à partir de l'unité de stockage de graphique embarquée (113), et permettre le déplacement de son propre train (110) dans une plage où la plage sur la voie de son propre train ne chevauche pas la plage sur la voie des autres trains, ou ne se rapproche pas d'une valeur spécifiée.
